(19) **Europäisches Patentamt**

**European Patent Office**

**Office européen des brevets**

(11) Veröffentlichungsnummer: **0 240 715 B1**

# EUROPÄISCHE PATENTSCHRIFT

(12)

(45) Veröffentlichungstag der Patentschrift:
**09.01.91 Patentblatt 91/02**

(21) Anmeldenummer: **87103022.7**

(22) Anmeldetag: **04.03.87**

(51) Int. Cl.⁵: **B29C 33/60, C08J 9/00, C08K 5/09, C08K 13/00, C08G 18/28, C08G 18/65**

(54) **Verfahren zur Herstellung von Formkörpern mit einem zelligen Kern und einer verdichteten Randzone mit verbesserten Entformungseigenschaften.**

(30) Priorität: **07.03.86 DE 3607447**

(43) Veröffentlichungstag der Anmeldung:
**14.10.87 Patentblatt 87/42**

(45) Bekanntmachung des Hinweises auf die Patenterteilung:
**09.01.91 Patentblatt 91/02**

(84) Benannte Vertragsstaaten:
**AT BE DE ES FR GB IT NL SE**

(56) Entgegenhaltungen:
**WO-A-84/03288**
**DE-A- 1 953 637**
**US-A- 4 381 353**
**US-A- 4 499 254**
**US-A- 4 519 965**

(73) Patentinhaber: **BASF Aktiengesellschaft**
**Carl-Bosch-Strasse 38**
**D-6700 Ludwigshafen (DE)**

(72) Erfinder: **Horn, Peter, Dr.**
**Neue Stuecker 15**
**D-6900 Heidelberg (DE)**
Erfinder: **Chakrabarti, Sarbananda**
**Bruesseler Ring 45**
**D-6700 Ludwigshafen (DE)**
Erfinder: **Boehme, Ralf**
**Ungsteiner Strasse 12**
**D-6700 Ludwigshafen (DE)**
Erfinder: **Schmidt, Hans Ulrich**
**Wredestrasse 53**
**D-6700 Ludwigshafen (DE)**
Erfinder: **Streu, Joachim, Dr.**
**Am Huettenwingert 32**
**D-6706 Wachenheim (DE)**

## Beschreibung

Die Herstellung von Formkörpem mit einem zelligen Kern und einer verdichteten Randzone durch Umsetzung von organischen Polyisocyanaten, höhenmolekularen Verbindungen mit mindestens zwei reaktiven Wasserstoffatomen und gegebenenfalls Kettenverlängerungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug ist seit langem bekannt und wird beispielsweise beschrieben in der DE-OS 16 94 138 (GB 1 209 243), DE-PS 19 55 891 (GB 1 321 679) und DE-AS 17 69 886 (US 3 824 199).

Eine zusammenfassende Übersicht über derartige Formkörper, sogenannte Polyurethan-Integralschaumstoffe, wurde beispielsweise veröffentlicht in Kunststoff-Handbuch, Band 7, Polyurethane von G. Oertel, Carl-Hanser-Verlag, München, Wien, 2. Auflage, 1983, Seiten 333ff. und in Integralschaumstoffe von H. Piechota und H. Röhr, Carl-Hanser-Verlag, München, Wien, 1975.

Obgleich die Herstellung von harten, halbharten und weichelastischen Polyurethan-Integralschaumstoff-Formkörper eine außerordentliche technische Bedeutung erlangt hat, weisen die beschriebenen Verfahren technische Mängel auf. Nachteilig ist insbesondere, daß die Polyurethan-Formkörper an den Formwerkzeugen haften und daher schwer entformbar sind, was häufig zur Beschädigung der Formkörper, insbesondere deren Oberfläche, führt. Zur Vermeidung dieses Nachteils werden in der Regel polierte metallische Formwerkzeuge verwendet und/ oder die Formwerkzeuginnenflächen werden vor der Herstellung der Formkörper mit einem äußeren Trennmittel, beispfelsweise einem Wachs oder Silikonöl, versehen. Diese Methode ist nicht nur zeit- und kostenaufwendig, sondern kann auch, insbesondere bei silikonhaltigen Trennmitteln, zu erheblichen Lackierproblemen führen.

Eine Verbesserung der selbsttrennenden Eigenschaften bei der Herstellung von Polyurethan-Polyharnstoff-Formkörper nach der RIM-Technik konnte durch die Verwendung von Carbonsäureestern und/ oder Carbonsäureamiden, hergestellt durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400, als innere Formtrennmittel nach Angaben der EP-A-153 639 erzielt werden.

Nach Angaben der US-PS 4 519 965 finden als innere Formtrennmittel bei der Reaktionsspritzgußtechnik Mischungen Verwendung aus einem Zinkcarboxylat mit 8 bis 24 Kohlenstoffatomen im Carboxylrest und Stickstoff enthaltenden, mit Isocyanatgruppen reagierenden Polymeren zur Verbesserung der Verträglichkeit des Zinkcarboxylats mit den Aufbaukomponenten zur Polyurethan-Polyharnstoff-Herstellung.

Mit Hilfe der beschriebenen Methoden konnten die Entformungseigenschaften der Polyurethan-Polyharnstoff-Formkörper in Abhängigkeit von der Zusammensetzung des Systems zwar teilweise verbessert werden, ohne das Problem jedoch endgültig und zufriedenstellend zu lösen.

Die Aufgabe der vorliegenden Erfindung bestand darin, innere Trennmittel zu entwickeln, die die obengenannten Nachteile nicht aufweisen, im Hinblick auf die eingesetzten höhenmolekularen Verbindungen und in Abwesenheit von hochreaktiven, unsubstituierten oder in ortho-Stellung zu den Aminogruppen alkylsubstituierten, primären aromatischen Polyaminen vielfältig verwendbar sind und zu einer wesentlichen Verbesserung der selbsttrennenden Eigenschaften bei der Formkörperherstellung führen.

Diese Aufgabe konnte überraschenderweise durch die Verwendung eines speziellen inneren Trennmittels bei der Herstellung von Polyurethan-Integralschaumstoff-Formkörper gelöst werden.

Gegenstand der Erfindung ist somit ein Verfahren zur Herstellung von Formkörpem mit einem zelligen Kern und einer verdichteten Randzone mit verbesserten Entformungseigenschaften nach dem Polyisocyanat-Polyadditionsverfahren durch Umsetzung von

a) organischen Polyisocyanaten,

b) höhermolekularen Verbindungen mit mindestens 2 reaktiven Wasserstoffatomen und gegebenenfalls

c) niedermolekularen mehrwertigen Alkoholen, Polyoxyalkylen-polyolen und/oder sekundären aromatischen Diaminen in Gegenwart von

d) inneren Formtrennmitteln,

e) Katalysatoren

f) Treibmitteln und gegebenenfalls

g) Hilfsmitteln und/oder Zusatzstoffen

in einem geschlossenen Formwerkzeug unter Verdichtung, das dadurch gekennzeichnet ist, daß man als inneres Formtrennmittel verwendet

A) 0,1 bis 12 Gew.%, vorzugsweise 1 bis 8 Gew.%, bezogen auf das Gesamtgewicht der Komponenten (b) und (c) einer Mischung aus

i) 5 bis 80 Gew.Teilen, vorzugsweise 30 bis 70 Gew.-Teilen mindestens eines organischen Amins und

ii) 20 bis 95 Gew.-Teilen, vorzugsweise 30 bis 70 Gew.-Teilen mindestens eines Metallsalzes der Stearinsäure und

B) 0,01 bis 32 Gew.%, vorzugsweise 0,2 bis 20 Gew.% und insbesondere 1,2 bis 12 Gew.%, bezogen auf das Gesamtgewicht der Komponenten (b) und (c) mindestens einer organischen Mono- und/oder Dicarbonsäure oder deren Anhydride.

Durch die Verwendung der inneren Formtrennmittel erübrigt sich im wesentlichen eine Vorbehandlung des Formwerkzeugs mit äußeren Trennmitteln. Bemerkenswert ist, daß die Lackierbarkeit der erhaltenen Polyurethan–Formkörper durch den Zusatz des erfindungsgemäß verwendbaren inneren Trennmittels nicht erschwert oder gar unmöglich gemacht wird. Vorteilhaft ist ferner, daß die inneren Formtrennmittel bei Raumtemperatur oder unter der Verarbeitungstemperatur in Form von Lösungen, Suspensionen oder Dispersionen vorliegen und daher gut handhabbar sind und trotz des Gehalts an mindestens einer organischen Mono- und/oder Dicarbonsäure oder deren Anhydride diese vorzügliche Trennwirkung bei der Integralschaumstoffherstellung zeigen und den Reaktionsablauf nicht nachteilig beeinflussen.

Zu den für das erfindungsgemäße Verfahren verwendbaren Aufbaukomponenten (a), (b) und (d) bis (f) sowie gegebenenfalls (c) und (g) und den Ausgangsstoffen zur Herstellung der inneren Formtrennmittel ist folgendes auszuführen :

Als organische Polyisocyanate (a) kommen aliphatische, cycloaliphatische, araliphatische und vorzugsweise aromatische mehrwertige Isocyanate in Frage. Im einzelnen seien beispielshaft genannt : Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6 ; cycloaliphatische Diisocyanate, wie Cyclohexan-1,3- und 1,4-diisocyanat sowie beliebige Gemische dieser Isomeren, 1-Isocyanato-3,3,5--trimethyl-5-isocganatomethyl-cyclohexan (Isophoron-diisocyanat), 2,4-und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung obiger Di- und/oder Polyisocyanate erhalten werden, verwendet. Als modifizierte organische Di- und Polyisocyanate kommen beispielsweise in Betracht : Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patens 761 626 und der NL-OS 71 02 524 beschrieben werden, Isocyanuratgruppen aufweisende Polyisocyanate, wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050 ; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 12 31 688 genannt werden.

Vorzugsweise kommen jedoch zur Anwendung : urethangruppenhaltige Polyisocyanate, beispielsweise mit niedermolekularen linearen oder verzweigten Alkandiolen, Dialkylenglykolen oder Polyoxyalkylenglykolen mit Molekulargewichten bis 3000 auf Basis von Ethylenoxid, 1,2-Propylenoxid oder deren Gemischen, modifiziertes 4,4'- und/oder 2,4'-Diphenylmethan-diisocyanat oder 2,4- und/oder 2,6-Toluylen-diisocyanat, Carbodiimidgruppen und/oder Isocyanuratringe enthaltende Polyisocyanate, z.B. auf 4,4'-, 2,4'-Diphenylmethan-diisocyanat-, 2,4- und/oder 2,6-Toluylen-diisocyanat-Basis und insbesondere 4,4'-Diphenylmethan-diisocyanat, Mischungen aus 2,4'-und 4,4'-Diphenylmethan-diisocyanat, Toluylen-diisocyanate, Mischungen aus Diphenylmethan-diisocyanaten und Polyphenyl-polymethylen-polyisocyanaten (Roh-MDI) und Gemische aus Toluylen-diisocyanaten und Roh-MDI.

Zur Herstellung der weichelastischen Polyurethan-Integralschaumstoff-Formkörper werden zweckmäßigerweise aromatische Polyisocyanate oder Polyisocyanatmischungen mit einer durchschnittlichen Funktionalität von 2 bis 2,6, vorzugsweise 2 bis 2,4 und zur Herstellung von harten PolyurethanIntegralschaumstoff-Formkörpem solche mit einer durchschnittlichen Funktionalität von 2,5 bis 4, vorzugsweise von 2,8 bis 3,5 verwendet.

Als höhermolekulare Verbindungen (b) mit mindestens zwei reaktiven Wasserstoffatomen werden solche mit einer Funktionalität von 2 bis 8 und einem Molekulargewicht von 480 bis 8500, verwendet, wobei zur Herstellung von weichelastischen Integralschaumstoff-Formkörpem zweckmäßigerweise di-und/oder trifunktionelle, vorzugsweise difunktionelle Verbindungen (b) mit einem Molekulargewicht von 1800 bis 8500, vorzugsweise von 2800 bis 5600 und zur herstellung von harten Integralschaumstoff-Formkörpern solche mit einer Funktionalität von 3 bis 8, vorzugsweise von 3 bis 4 und einem Molekulargewicht von 480 bis 3500, vorzugsweise von 600 bis 3000 Anwendung finden. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycapronsäure.

Die Polyester-polyole besitzen vorzugsweise eine Funktionalität von 2 bis 3 und ein Molekulargewicht von 1.000 bis 3.000 und vorzugsweise 1.800 bis 2.500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polgmerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit, Sucrose und Saccharose.

Die Polyether-polyole besitzen vorzugsweise eine Funktionalität von 2 bis 4 und Molekulargewichte von 480 bis 8.500, vorzugsweise 600 bis 5.600 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/ oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Während zur Herstellung von weichelastischen und halbharten Polyurethan-Integralschaumstoffen zweckmäßigerweise niedermolekulare Verbindungen (c), d.h. Verbindungen mit Molekulargewichten von 60 bis 450, vorzugsweise von 60 bis 300 und mindestens zwei, vorzugsweise 2 bis 4 reaktiven Wasserstoffatomen aus der Gruppe der mehrwertigen Alkohole, Polyoxyalkylen-polyole und sekundären aromatischen Diamine oder Mischungen aus mindestens zwei der genannten Verbindungsarten verwendet werden, ist die Mitverwendung dieser Verbindungen (c) zur Herstellung von harten Integral-schaumstoff-Formkörpern nicht unbedingt erforderlich. Gegebenenfalls kann es jedoch zweckmäßig sein, auch bei diesen Formkörpern durch Zusatz der Komponente (c) bestimmte mechanische Eigenschaften zu modifizieren.

Als mehrwertige Alkohole kommen beispielsweise in Betracht: aliphatische und/oder araliphatische Diole mit 2 bis 14, vorzugsweise 2 bis 6 Kohlenstoffatomen, wie z.B. Propandiol-1,3, Decandiol-1,10, Cyclohexan-diole, Bis-(2-hydroxyethyl)-hydrochinon und vorzugsweise Ethandiol-1,2, Butandiol-1,4 und Hexandiol-1,6, Triole, wie z.B. Glycerin und Trimethylolpropan, und Pentaerythrit. Geeignete Polyoxyalkylen-polyole sind beispielsweise Diethylen-glykol, Dipropylen-glykol und niedermolekulare Polyoxyethylen-polyole, Polyoxypropylen-polyole und Polyoxyethylen-polyoxypropylen-polyolen auf Basis der vorgenannten Startermoleküle. Als sekundäre aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie z.B. N,N'-Diethyl-, N,N'-Di-sek.-pentyl-, N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Vorzugsweise Anwendung finden als Komponente (c) niedermolekulare zwei-und/oder dreiwertige Alkohole und/oder di- bis tetrafunktionelle Polyoxyalkylen-polyole mit Molekulargewichten bis 450.

Sofern die Verbindungen der Komponente (c) mitverwendet werden, können diese, wie bereits dargelegt wurde, in Form von Mischungen oder einzeln eingesetzt werden und werden vorteilhafterweise in Mengen von 1 bis 40 Gew.-Teilen, vorzugsweise von 5 bis 20 Gew.-Teilen, bezogen auf 100 Gew.-Teile der höhermolekularen Verbindungen (b), angewandt.

Wie bereits dargelegt wurde, bestehen die erfindungsgemäß verwendbaren inneren Formtrennmittel (d) aus

A) einer Mischung aus

i) mindestens einem organischen Amin und

ii) mindestens einem Metallsalz der Stearinsäure und

B) mindestens einer organischen Mono- und/oder Dicarbonsäure, wobei anstelle der freien Carbonsäuren auch deren Anhydride verwendet werden können.

Als organische Amine (Ai) eignen sich Mono- und/oder Polyamine ausgewählt aus der Gruppe der primären aliphatischen und/oder cycloaliphatischen Monoamine mit 3 bis 20 Kohlenstoffatomen, vorzugsweise 4 bis 13 Kohlenstoffatomen, wie z.B. Isopropyl-, n-Butyl-, iso-Butyl-, sek. Butyl-, n- und iso-Amyl-, 1,2-Dimethylpropyl-, n- und iso-Hexyl-, 2-Ethyl-hexyl-, Octyl-, 6-Methyl-heptyl-2-, 2-Ethyl-octyl-, Decyl-, Tridecyl-, Dodecyl-, Hexadecyl-, Octadecyl-, Stearyl- und Cyclohexylamin, der linearen, verzweigten oder cyclischen Alkanolamine mit 2 bis 12 Kohlenstoffatomen, vorzugsweise 2 bis 10 Kohlenstoffatomen wie z.B. Ethanolamin, Propanolamin, Butanolamin, 3-Hydroxybutylamin, 2-Hydroxybutylamin, Pentanolamin, Hexanolamin, 4-Hydroxyhexylamin, Octanolamin und 2-Hydroxyethylpiperazin, N-Methyl-, N-Butyl-, N-Neopentyl-, N-Cyclohexylethanolamin, N-Methyl-isopropanolamin, Diethanolamin, Dipropanolamin, N-Alkyl-dialkanolamin mit 1 bis 4-Kohlenstoffatome im Alkylrest wie z.B. N-Methyl-, N-Butyl-, N-Cyclohexyl-diethanol- bzw. diisopropanolamin, 1,4-Dihydroxyethyl-piperazin, 1,4-Diisopropanol-piperazin, Triethanolamin und Triisopropanolamin, der aliphatischen oder cycloaliphatischen primären Diamine mit 2 bis 20 Kohlenstoffatomen, vorzugsweise 2 bis 12 Kohlenstoffatomen, wie z.B. Ethylen-, 1,2- bzw. 1,3-Propylen-, 1,4-Butylen-, 1,6-Hexamethylen-, Neopentylen-, 1,10-Decylen-, 1,12-Dodecylen-diamin und Diaminocyclohexane, der aliphatischen oder cycloaliphatischen primären Mono- und/oder Polyamine mit Molekulargewichten von z.B. 103 bis 2000, vorzugsweise von 117 bis 800, die zusätzlich sekundäre und/oder tertiäre Aminogruppen und/oder heterocyclische Reste und/oder Hydroxylgruppen und/oder Ethergruppen gebunden enthalten wie z.B. Diethylen-triamin, Dipropylentriamin, Di-hexamethylen-triamin, 1-Diethylamino-4-pentyl-, 3-(2-Ethylhexoxy)-propyl-, 3-(2-Aminoethyl)aminopropylamin, N,N'-Bis(3-aminopropyl)ethylendiamin, Kondensationsprodukte aus Diethylentriamin, N-2-Aminoethylethanolamin, 2-Aminoethoxyethanol-2, 4,9-Dioxadodecan-1,12-diamin, N,N'-Bis-(3-aminopropyl)-ethylendiamin, 1-(2-Aminoethyl-)piperazin, 1,4-Bis-(2-Aminoethyl-)piperazin, 1,4-Bis-(3-Aminopropyl-)piperazin, Tris-(aminoethyl-)amin und Tris-(3-aminopropyl-)amin und Polyoxyalkylen-polyamine mit primären und/oder sekundären Aminogruppen, einer Funktionalität von 1 bis 6, vorzugsweise 2 bis 4 und Molekulargewichten von 400 bis 5000, vorzugsweise von 400 bis 2000 wie z.B. Polyoxypropylen-diamine, Polyoxyrethylen-diamine, Polyoxypropylen-polyoxyethylen-diamine, Polyoxypropylen-triamine, Polyoxyethylen-triamine, Polyoxypropylen-polyoxyethylen-triamine und Polyoxypropylen-polyoxyethylen-tetramine. Geeignet sind auch Polyoxyalkylen-polyamine, die bis zu 50%, vorzugsweise bis zu 15%, endständige primäre und/oder sekundäre Hydroxylgruppen gebunden enthalten. Die organischen Amine (Ai) können einzeln oder als Mischungen aus Aminen der gleichen Gruppe oder aus Aminen von verschiedenen Gruppen eingesetzt werden.

Als organische Amine (Ai) haben sich insbesondere bewährt und werden daher vorzugsweise eingesetzt : n-Butylamin, Tridecylamin, 6-Methyl-heptyl-2-amin, 1-(2-Aminoethyl)piperazin, 1-(2-Hydroxyethyl)piperazin, N-2-Aminoethyl-ethanolamin, Diethylentriamin, Dipropylentriamin, N,N-Dimethyl-diaminopentan-1,5, Polyalkylen-polyamine mit Molekulargewichten von 117 bis 800, beispielsweise Polyethylen-polyamine, Polyoxypropylen-triamine und 3,3'-Dimethyl-4,4'-diamino-dicyclohexylmethan.

Zur Herstellung der Metallsalze (Aii) eignet sich die handelsübliche Stearinsäuren, die, ohne daß die Trennwirkung signifikant beeinträchtigt wird, bis zu 10 Gew.-%, vorzugsweise bis zu 5 Gew.-% andere, gegebenenfalls ungesättigte Carbonsäuren mit 8 bis 24 Kohlenstoffatomen, wie z.B. Palmitinsäure, Ölsäure, Ricinolsäure u.a. enthalten können.

Als Metalle für die Bildung der Metallsalze (Aii) finden Alkalimetalle, vorzugsweise Natrium und Kalium, Erdalkalimetalle, vorzugsweise Magnesium und Calcium und insbesondere Zink Verwendung. Vorzugsweise werden als Metallsalze der Stearinsäure Zinkstearat, Calciumstearat und Natriumstearat oder Mischungen aus mindestens zwei Stearaten eingesetzt. Insbesondere verwendet wird eine Mischung aus Zink-, Calcium- und Natriumstearat.

Die erfindungsgemäß verwendbaren inneren Trennmittel enthalten als wesentliche Aufbaukomponente Mono- und/oder Dicarbonsäuren oder deren Anhydride (B). In Betracht kommen aliphatische Monocarbonsäuren mit 1 bis 20 Kohlenstoffatomen, vorzugsweise 5 bis 18 Kohlenstoffatomen, aliphatische Dicarbonsäuren mit 2 bis 36 Kohlenstoffatomen, vorzugsweise 2 bis 12 Kohlenstoffatomen, aromatische Mono- und/oder Dicarbonsäuren mit 7 bis 12 Kohlenstoffatomen, vorzugsweise 7 bis 10 Kohlenstoffatomen, die gegebenenfalls olefinisch ungesättigte Einheiten und/oder mit Isocyanatgruppen reaktive Reste, wie z.B. Hydroxyl-, Amino- oder Alkylaminogruppen, gebunden enthalten können. Anstelle der Mono- und/oder Dicarbonsäuren oder im Gemisch mit diesen können auch die entsprechenden Carbonsäureanhydride eingesetzt werden. Beispielhaft genannt seien aliphatische Monocarbonsäuren wie z.B. Leisensäure, Essigsäure, Propionsäure, Isovaleriansäure, Capronsäure, Caprinsäure, Laurinsäure, Myristinsäure, Palmitinsäure, Stearinsäure, Ricinolsäure, Arachinsäure, Hydroxystearinsäure, Isostearinsäure und Ölsäure, aliphatische Dicarbonsäuren wie z.B. Oxalsäure, Bernsteinsäure, Glutarsäure, Adipinsäure, Pimelinsäure, Korksäure, Sebacinsäure, Undecandisäure, Dodecandisäure, dimerisierte und trimerisierte Fettsäuren, Maleinsäure und Fumarsäure und aromatische Mono- und/oder Dicarbonsäuren wie z.B. Benzoesäure, die Toluylsäuren, Hydroxybenzoesäuren, Aminobenzoesäuren, Phthalsäure, Isophthalsäure und Terephthalsäure. Vorzugsweise Anwendung finden folgende Mono- und Dicarbonsäuren sowie Carbonsäureanhydride Oxalsäure, Stearinsäure, Ölsäure, Adipinsäure, Benzoesäure, Benzoesäureanhydrid. Die Mono-, Dicarbonsäuren und deren Anhydride können einzeln oder in Form von Mischungen verwendet werden.

Zur Herstellung der erfindungsgemäßen inneren Trennmittel können die Aufbaukomponenten (Ai) bis (Aii) und (B) gleichzeitig oder nacheinander, zweckmäßigerweise unter Rühren bei Temperaturen von 20 bis 140°C, vorzugsweise von 40 bis 130°C gemischt werden. Nach einer bevorzugten Ausführungsform wird das Amin oder Amingemisch (Ai) vorgelegt, die organischen Mono- und/oder Dicarbonsäuren oder deren Anhydride (B) hinzugefügt und unter Rühren im genannten Temperaturbereich in der erhaltenen Reaktionsmischung die Stearate gelöst. Die so erhaltenen Produkte sind oberhalb des Schmelzpunktes eine begrenzte Zeit, beispielsweise bis zu 2 Monaten lagerstabil. Das erhaltene innere Trennmittel wird danach in der erforderlichen Menge in mindestens eine Aufbaukomponente zur Herstellung der Polyurethan-Formkörper, vorzugsweise in die sogenannte Komponente (A), bei Temperaturen von 20 bis 100°C eingebracht.

Als Katalysatoren (e) werden insbesondere Verbindungen verwendet, die die Reaktion der Hydroxylgruppen enthaltenden Verbindungen der Komponenten (b) und gegebenenfalls (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetra-methylethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen wie Triethanolamin, Triisopropanolamin, N-Methyl- und N-Ethyl-diethanolamin und Dimethylethanolamin.

Als Katalysatoren kommen ferner in Betracht : Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Zu Treibmitteln (f), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,2,2-trifluorethan.

Auch Gemische dieser niedrigsiedenden Flüssigkeiten können verwendet werden.

Die zweckmäßigste Menge an niedrigsiedender Flüssigkeit zur Herstellung der Polyurethan-Integralschaumstoff-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teile der Komponente (b), zufriedenstellende Ergebnisse. Zur Herstellung von Formkörpern mit einer dichten, kompakten Oberfläche und im wesentlichen porenfreier Randzone werden die im wesentlichen wasserfreien Reaktionsmischungen ausschließlich mit niedrigsiedenden Flüssigkeiten als physikalisch wirkenden Treibmitteln verschäumt.

Der Reaktionsmischung können gegebenenfalls auch noch Hilfsmittel und/oder Zusatzstoffe (g) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 10 Gewichtsteilen, vorzugsweise 0,1 bis 5 Gewichtsteilen, bezogen auf 100 Gewichtsteile der Komponente (b), angewandt.

Als besonders vorteilhaft hat es sich erwiesen, Ricinolsäureester in Kombination mit den erfindungsgemäß verwendbaren inneren Formtrennmitteln zu verwenden, da derartige Mischungen überraschenderweise einen synergistischen Effekt zeigen.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt : anorganische Füllstoffe wie silikatische Mineralien, beispielsweise Schichtsilikate wie Antigorit, Serpentin, Hornblenden, Amphibole, Chrisotil, Talkum ; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Aebestmehl u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollaetonit und insbesondere Glaefasern verschiedener Länge, die gegebenenfalls geschlichtet sein können. Als organische Füllstoffe kommen beispielsweise in Betracht : Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt werden sowie Filler-polyoxyalkylen-polyole, bei denen wäßrige Polymerdispersionen in Polyoxyalkylen-polyol-dispersionen übergeführt werden.

Die anorganischen und organischen Füllstoffe können einzeln oder als Gemische verwendet werden. Vorzugsweise Anwendung finden stabile Füllstoff-Polyoxyalkglen-Polyol-Dispersionen, bei denen die Füllstoffe in Gegenwart von Polyoxyalkylen-polyolen in situ mit hohen örtlichen Energiedichten auf eine Teilchengröße kleiner als 7 μm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der Polyurethan-Integralschaumstoff-Formkörper werden die organischen Polyisocyanate (a), höhermolekularen Verbindungen mit mindestens zwei reaktiven Wasserstoffatomen (b), und gegebenenfalls niedermolekularen mehrwertigen Alkohole, Polyoxyalkylen-polyole und/oder sek. aromatischen Diamine (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 1 :0,85 bis 1,25, vorzugsweise 1 :0,95 bis 1,15 beträgt.

Die Polyurethan-Integralschaumstoff-Formkörper, vorzugsweise die weichelastischen Formkörper, werden nach dem Prepolymer-Verfahren oder vorzugsweise nach dem one shot-Verfahren mit Hilfe der Niederdruck-Technik oder vorzugsweise der Reaktionsspritzguß-Technik (RIM) hergestellt. Diese Verfahrensweisen werden beispielsweise beschrieben von Piechota und Röhr in "Integralschaumstoff", Carl-Hanser-Verlag, München, Wien 1975 ; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333ff.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Komponenten (b), (d), (e), (f) und gegebenenfalls (c) und (g) in der Komponente (A) zu vereinigen und als Komponente (B) die organischen Polyisocyanate, modifizierten Polyisocyanate und/oder NCO-Prepolymere zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen Polyurethan-Integralschaumstoff-Formkörper eine Dichte von 0,06 bis 1,2 g/cm³ aufweisen, wobei die mikrozellularen, elastischen Formkörper vorzugsweise eine Dichte von 0,7 bis 1,2 g/cm³, insbesondere von 0,8 bis 1,0 g/cm³, die harten und halbharten Formkörper vorzugsweise eine Dichte von 0,2 bis 0,8 g/cm³, insbesondere von 0,35 bis 0,8 g/cm³ und die weichelastischen Formkörper vorzugsweise eine Dichte von 0,2 bis 0,7 g/cm³, vorzugsweise von 0,4 bis 0,7 g/cm³ besitzen. Die Ausgangskomponenten werden mit einer Temperatur von 15 bis 80°C, vorzugsweise von 40 bis 55°C in die Form eingebracht. Die Formwerkzeugtemperatur beträgt zweckmäßigerweise 20 bis 100°C, vorzugsweise 30 bis 80°C. Die Verdichtungsgrade zur Herstellung der mikrozellularen oder zellhaltigen Formkörper liegt zwischen 1,1 und 8,3, vorzugsweise zwischen 2 und 8.

Die nach dem erfindungsgemäßen Verfahren erhaltenen mikrozellularen Polyurethan-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie als technische Gehäuseteile und Laufrollen. Die zellhaltigen Schaumstoffe finden beispielsweise als Armlehnen, Kopfstützen, Sicherheitsabdeckungen im Automobilinnenraum sowie als Motorrad- und Fahrradsättel, Schuhsohlen und Deckschichten in Verbundschaumstoffen Anwendung.

Die in den Beispielen genannten Teile beziehen sich auf das Gewicht.

Beispiele

Herstellung des inneren Formtrennmittels I :
Zu einer Mischung aus
598,43 Gew.-Teilen N-2-Aminoethylethanolamin,
136,37 Gew.-Teilen 1-(2-Hydroxiethyl)-piperazin,
306,85 Gew.-Teilen 1-(2-Aminoethyl)-piperazin und
182,85 Gew.-Teilen n-Butylamin
wurden in einem 4-1-Dreihalskolben unter Rühren bei Raumtemperatur
706,08 Gew.-Teile Ölsäure hinzugefügt.
Die Reaktionsmischung wurde auf 60°C erwärmt und bei dieser Temperatur eine Stunde gerührt. Anschließend wurden der Mischung portionsweise
1930,59 Gew.-Teile Zinkstearat,
69,41 Gew.-Teile Natriumstearat und
69,41 Gew.-Teile Calciumstearat
einverleibt und die Mischung solange gerührt bis eine klare Lösung entstand, die man auf Raumtemperatur abkühlen ließ.
Herstellung des inneren Formtrennmittels II :
Zu einer Mischung aus
1140 Gew.-Teilen N-2-Aminoethylethanolamin und
860 Gew.-Teilen Tridecylamin
wurden bei 130°C unter Rühren portionsweise
2000 Gew.-Teile Zinkstearat,
133 Gew.-Teile Natriumstearat und
133 Gew.-Teile Calciumstearat
hinzugefügt. Die Reaktionsmischung wurde ungefähr 1 Stunde gerührt bis eine gelbliche Lösung entstand, die man auf Raumtemperatur abkühlen ließ.
Die Mischung wurde zusammen mit Ölsäure der Polyurethanformulierung einverleibt.
Herstellung des inneren Formtrennmittels III :
Zu einer Mischung aus
448,82 Gew.-Teilen N-2-Aminoethylethanolamin,
102,28 Gew.-Teilen 1-(2-Hydroxiethyl)-piperazin,
184,12 Gew.-Teilen 1-(2-Aminoethyl)-piperazin,
137,14 Gew.-Teilen n-Butylamin und
46,02 Gew.-Teilen Dipropylen-triamin

wurden in einem 6-1-Dreihalskolben, ausgestattet mit Rückflußkühler und Rührer, unter Rühren bei Raumtemperatur portionsweise
529,56 Gew.-Teile Ölsäure hinzugefügt.
Die Reaktionsmischung wurde auf 100°C erwärmt und bei dieser Temperatur eine Stunde gerührt. Anschließend wurden der Mischung portionsweise
1447,94 Gew.-Teile Zinkstearat,
52,06 Gew.-Teile Natriumstearat und
52,06 Gew.-Teile Calciumstearat
einverleibt und die Mischung bei 100°C solange gerührt bis eine klare Lösung entstand, die man auf Raumtemperatur abkühlen ließ.

Beispiel 1

A-Komponente : Mischung aus
61,10 Gew.-Teilen eines Polyoxypropylen-polyoxyethylen-triols mit einer Hydroxylzahl von 35, hergestellt durch Propoxylierung von Trimethylolpropan und anschließende Polyaddition von Ethylenoxid an das erhaltene Trimethylolpropan-polyoxyrolen-addukt,
5,02 Gew.-Teilen Ethylenglykol,
0,41 Gew.-Teilen Glycerin,
5,0 Gew.-Teilen Formtrennmittel I,
17,60 Gew.-Teilen eines Pfropfpolyetherpolyols mit der Hydroxylzahl 24 auf Basis eines mit Trimethylolpropan gestarteten Polyoxyethylen-polyoxypropylen-polyols mit einem Propylenoxidgehalt von 87 Gew.% und einem Ethylenoxidgehalt von 13 Gew.%, auf das 31 Gew.% einer Mischung aus Styrol-Acrylnitril im Gewichtsverhältnis 1 :1 durch in situ Polymerisation gepfropft wurde.
0,80 Gew.-Teilen einer 30 gew.%igen Lösung von Triethylendiamin in Ethylenglykol,
0,05 Gew.-Teilen Silikonöl (Tegostab[R] B 8407 der Goldschmidt AG, Essen),
0,02 Gew.-Teilen Zinn(II)octoat und
10,00 Gew.-Teilen Trichlorfluormethan.
B-Komponente : Mit Propylenglykyol partiell modifizierte Mischung aus Diphenylmethan-diisocyanat-Isomeren und Polyphenyl-polymethylen-polyisocyanaten mit einem Diphenylmethan-diisocyanatgehalt von 90 Gew.%, bezogen auf das Gesamtgewicht.

100 Gew.-Teile der Komponente A und 43,5 Gew.-Teile der Komponente B wurden bei 22°C nach dem Reaktionsspritzguß-Verfahren auf einer Hochdruckdosieranlage vom Typ Puromat [R]50 der Elastogran-Maschinenbau GmbH, 8021 Straßlach, in einem auf 45°C temperierten metallischen Formwerkzeug mit der Raumform einer Automobil-Armlehne bzw. eines -Lenkrads zu Formteilen verarbeitet. Die Schußzeit betrug 4,7 bis 5,0 Sekunden und die Formstandzeit 3,5 Minuten.

Als Anzahl der möglichen Entformungen wurde die Zahl festgelegt, bis zu der der Formkörper beim Öffnen des Formwerkzeugs problemlos entnommen werden konnte, ohne daß durch zu große Ädhäsionskräfte der Formkörper an der Formwerkzeugunterseite festgehalten oder/und verzogen wurde.

Die Versuchsserie wurde abgebrochen, nachdem jeweils 30 Armlehnen bzw. Lenkräder problemlos ohne jegliche Verformung entformt wurden.

Beispiel 2

Man verfuhr analog den Angaben von Beispiel 1, verwendete jedoch in der A-Komponente anstelle des Formtrennmittels I

4 Gew.-Teile des inneren Formtrennmittels II und 1,24 Gew.-Teile Ölsäure.

In dem Lenkradformwerkzeug konnten 25 Lenkräder problemlos entformt werden. Danach wurde die Versuchsserie abgebrochen.

Beispiel 3

A-Komponente : Mischung aus

52,75 Gew.-Teilen eines Polyoxypropylen-triols mit einer Hydroxylzahl von 875, hergestellt durch Propoxylierung von Trimethylolpropan,
6,10 Gew.-Teilen Dipropylenglykol,
21,70 Gew.-Teilen eines Polyoxypropylen-polyoxyethylen-triols mit einer Hydroxylzahl von 35, hergestellt durch Propoxylierung von Glycerin und anschließender Polyaddition von Ethylenoxid an das erhaltene Glycerin-polyoxypropylenaddukt,
0,45 Gew.-Teilen einer 50 Gew.-%igen wäßrigen Lösung von sulfoniertem Rizinusöl,
1,50 Stabilisator (OS 710 der Fa. Bayer AG),
1,50 Gew.-Teilen Dimethylbenzylamin,
0,20 Gew.-Teilen I-Methylimidazol,
5,8 Gew.-Teilen Trichlorfluormethan,
5,0 Gew.-Teilen Formtrennmittel III und
5,0 Gew.-Teilen Rizinolsäureester mit einer Hydroxylzahl von 43 und einer Säurezahl von 0,7.

B-Komponente : Mischung aus Diphenylmethandiisocyanaten und Polyphenyl-polymethylen-polyisocyanaten (Roh-MDI) mit einem NCO-Gehalt von 31 Gew.-%

100 Gew.-Teile der Komponente A mit einer Temperatur von 25°C und
144 Gew.-Teile der Komponente B mit einer Temperatur von 28°C wurden nach dem Reaktionsspritzguß-Verfahren auf einer Hochdruckdosieranlage vom Typ Puromat(R) 50 der Elastogran-Maschinen GmbH, 8021 Straßlach, in einem auf 50 bis 55°C temperierten metallischen Formwerkzeug mit der Raumform eines Autoscheibenprofils zu Formteilen verarbeitet. Die Schußzeit betrug 6 Sekunden und die Formstandzeit 5 Minuten.

Die Versuchsserie wurde abgebrochen, nachdem 30 Fensterprofile problemlos ohne jegliche Verformung entformt wurden.

Ansprüche

1. Verfahren zur Herstellung von Formkörpern mit einem zelligen Kern und einer verdichteten Randzone nach dem Polyisocyanat-Polyadditionsverfahren durch Umsetzung von
    a) organischen Polyisocyanaten,
    b) höhermolekularen Verbindungen mit mindestens 2 reaktiven Wasserstoffatomen und gegebenenfalls
    c) niedermolekularen mehrwertigen Alkoholen, Polyoxyalkylen-polyolen und/oder sekundären aromatischen Diaminen in Gegenwart von
    d) inneren Formtrennmitteln,
    e) Katalysatoren
    f) Treibmitteln und gegebenenfalls
    g) Hilfsmitteln und/oder Zusatzstoffen
    in einem geschlossenen Formwerkzeug unter Verdichtung, dadurch gekennzeichnet, daß man als inneres Formtrennmittel verwendet
    A) 0,1 bis 12 Gew.%, bezogen auf das Gesamtgewicht der Komponenten (b) und (c), einer Mischung aus
        i) 5 bis 80 Gew.Teilen mindestens eines organischen Amins und
        ii) 20 bis 95 Gew.-Teilen mindestens eines Metallsalzes der Stearinsäure und
    B) 0,01 bis 32 Gew.%, bezogen auf das Gesamtgewicht der Komponenten (b) und (c) mindestens einer organischen Mono- und/oder Dicarbonsäure oder deren Anhydride.

2. Verfahren-nach Anspruch 1, dadurch gekennzeichnet, daß als Komponente (b) Polyole mit einer Funktionalität von 2 bis 3 und einem Molekulargewicht von 1800 bis 8500 und als Komponente (c) niedermolekulare zwei- und/oder dreiwertige Alkohole und/oder di- bis tetrafunktionelle Polyoxyalkylenpolyole mit Molekulargewichten bis 450 verwendet werden.

3. Verfahren nach Anspruch 1, dadurch gekennzeichnet, daß zur Verdichtung ein Verdichtungsgrad von 1,1 bis 8,3 angewandt wird.

4. Verfahren nach Anspruch 1, dadurch gekennzeichnet, daß das organische Amin (A, i) ausgewählt wird aus der Gruppe der primären aliphatischen und/ oder cycloaliphatischen Monoamine mit 3 bis 20 Kohlenstoffatomen, der linearen, verzweigten oder cyclischen Alkanolamine mit 2 bis 12 Kohlenstoffatomen, der aliphatischen oder cycloaliphatischen primären Diamine mit 2 bis 20 Kohlenstoffatomen und der aliphatischen oder cycloaliphatischen primären Mono- und/oder Polyamine, die zusätzlich sekundäre und/oder tertiäre Aminogruppen und/oder heterocyclische Reste und/oder Hydroxylgruppen und/oder Ethergruppen gebunden enthalten.

5. Verfahren nach Anspruch 1, dadurch gekennzeichnet, daß als Metallsalze (A, ii) Zink-, Erdalkali- und/oder Alkalimetallstearate verwendet werden.

6. Verfahren nach Anspruch 1, dadurch gekennzeichnet, daß als Metallsalze (A, ii) Zink-, Calcium-, Magnesium-, Natrium- oder Kaliumstearat oder Mischungen aus mindestens zwei der genannten Stearate verwendet werden.

7. Verfahren nach Anspruch 1, dadurch gekennzeichnet, daß als Metallsalze der Stearinsäure (A, ii) eine Mischung aus Zink-, Calcium- und Natriumstearat verwendet wird.

8. Verfahren nach Anspruch 1, dadurch gekennzeichnet, daß als Mono und/oder Dicarbonsäuren oder deren Anhydride (B) verwendet werden aliphatische Monocarbonsäuren mit 1 bis 20 Kohlenstoffatomen, aliphatische Dicarbonsäuren mit 2 bis 36 Kohlenstoffatomen, aromatische Mono- und Dicarbonsäuren mit 7 bis 12 Kohlenstoffatomen oder deren Anhydride.

9. Verfahren nach Anspruch 1, dadurch gekennzeichnet, daß zur Herstellung des inneren Formtrennmittels (d) die Komponenten (A, i) und (B) vermischt und der erhaltenen Mischung die Komponente (A, ii) einverleibt wird.

10. Verfahren nach Anspruch 1, dadurch gekennzeichnet, daß zur Herstellung der Formkörper one shot-Systeme verwendet werden, die nach der Niederdruck- oder Reaktionsspritzgußtechnik (RIM) verarbeitet werden.

## Claims

1. A process for the production of moldings having a cellular core and a compacted peripheral zone by the polyisocyanate polyaddition process, by reacting

a) an organic polyisocyanate,

b) a high-molecular-weight compound containing 2 or more reactive hydrogen atoms, and, if desired,

c) a low-molecular-weight polyhydric alcohol, polyoxyalkylene-polyol and/or secondary aromatic diamine, in the presence of

d) an internal mold-release agent,

e) a catalyst,

f) a blowing agent and, if desired,

g) auxiliaries and/or additives, in a closed mold with compaction, which comprises using as the internal mold-release agent,

A) from 0.1 to 12% by weight, based on the total weight of components (b) and (c), of a mixture of

i) from 5 to 80 parts by weight of one or more organic amines, and

ii) from 20 to 95 parts by weight of one or more metal salts of stearic acid and

B) from 0.01 to 32% by weight, based on the total weight of components (b) and (c), of one or more organic mono- and/or dicarboxylic acids or an anhydride thereof.

2. A process as claimed in claim 1, wherein component (b) is a polyol having a functionality of from 2 to 3 and a molecular weight of from 1800 to 8500, and component (c) is a low-molecular-weight dihydric and/or trihydric alcohol and/or a difunctional to tetrafunctional polyoxyalkylene-polyol having a molecular weight of up to 450.

3. A process as claimed in claim 1, wherein the compaction is carried out to a degree of from 1.1 to 8.3.

4. A process as claimed in claim 1, wherein the organic amine (A, i) is selected from the group comprising primary aliphatic and/or cycloaliphatic monoamines having from 3 to 20 carbon atoms, linear, branched or cyclic alkanolamines having from 2 to 12 carbon atoms, aliphatic or cycloaliphatic primary diamines having from 2 to 20 carbon atoms, and aliphatic or cycloaliphatic primary monoamines and/or polyamines which additionally contain secondary and/or tertiary amino groups and/or heterocyclic radicals and/or hydroxyl groups and/or ether groups in bonded form.

5. A process as claimed in claim 1, wherein the metal salt (A, ii) used is zinc stearate, an alkaline earth metal stearate and/or an alkali metal stearate.

6. A process as claimed in claim 1, wherein the metal salt (A, ii) used is zinc stearate, calcium stearate, magnesium stearate, sodium stearate or potassium stearate or a mixture of two or more of said stearates.

7. A process as claimed in claim 1, wherein the metal salt of stearic acid (A, ii) used is a mixture of zinc stearate, calcium stearate and sodium stearate.

8. A process as claimed in claim 1, wherein the monocarboxylic acid and/or dicarboxylic acid or the anhydride thereof (B) is an aliphatic monocarboxylic acid having from 1 to 20 carbon atoms, an aliphatic dicarboxylic acid having from 2 to 36 carbon atoms, an aromatic monocarboxylic acid or dicarboxylic acid having from 7 to 12 carbon atoms, or an anhydride thereof.

9. A process as claimed in claim 1, wherein, to prepare the internal mold-release agent (d), components (A, i) and (B) are mixed, and component (A, ii) is introduced into the resultant mixture.

10. A process as claimed in claim 1, wherein the molding is produced using a one-shot system by lowpressure or reaction injection molding (RIM).

## Revendications

1. Procédé de fabrication d'articles ou corps moulés à noyau cellulaire et à zone de bordure ou lisière densifiée, selon le procédé de polyaddition de polyisocyanate, par la réaction

    a) de polyisocyanates organiques,

    b) de composés de poids moléculaires élevés comportant au moins deux atomes d'hydrogène réactifs et, éventuellement,

    c) d'alcools polyhydroxylés de faible poids moléculaire, de polyoxyalkylène-polyols et/ou de diamines aromatiques secondaires, en présence

    d) d'agents de démoulage internes,

    e) de catalyseurs,

    f) d'agents porogènes et, éventuellement,

    g) d'adjuvants et/ou d'additifs, dans un outil de moulage, et sous compression, caractérisé en ce qu'a titre d'agent de démoulage interne, on utilise

    A) 0,1 à 12% en poids, par rapport au poids total des composants (b) et (c), d'un mélange constitué de

    i) 5 à 80 parties en poids d'au moins une amine organique et

    ii) 20 à 95 parties en poids d'au moins un sel de métal de l'acide stéarique et

    B) 0,01 à 32% en poids, par rapport au poids total des composants (b) et (c), d'au moins un acide organique mono- et/ou dicarboxylique, ou leurs anhydrides,

2. Procédé suivant la revendication 1, caractérisé en ce qu'à titre de composant (b), on utilise des polyols d'une fonctionnalité de 2 à 3 et d'un poids moléculaire de 1800 à 8500 et, à titre de composant (c), des alcools di- et/ou trihydroxylés de faible poids moléculaire et/ou des polyoxyalkylène-polyols di- à tétrafonctionnels possédant des poids moléculaires allant jusqu'a 450.

3. Procédé suivant la revendication 1, caractérisé en ce que pour la compression on utilise un facteur ou degré de compression de 1,1 à 8,3.

4. Procédé suivant la revendication 1, caractérisé en ce que l'on choisit l'amine organique (A, i) dans le groupe formé par les monoamines cycloaliphatiques et/ou aliphatiques, primaires, comportant de 3 à 20 atomes de carbone, les alcanolamines linéaires, ramifiées, ou cycliques, comportant de 2 à 12 atomes de carbone, les diamines aliphatiques ou cycloaliphatiques, primaires, comportant de 2 à 20 atomes de carbone et les mono- et/ou polyamines aliphatiques ou cycloaliphatiques, primaires, qui contiennent complémentairement, en liaison, des radicaux amino secondaires et/ou tertiaires et/ou des radicaux hétérocycliques et/ou des radicaux hydroxyle et/ou des radicaux éther.

5. Procédé suivant ta revendicaticon 1, caractérisé en ce qu'à titre de sels de métaux (A, ii), on utilise des stéarates de zinc, de métaux alcalino-terreux et/ou de métaux alcalins.

6. Procédé suivant la revendicaticon 1, caractérisé en çe qu'à titre de sels de métaux (A, ii), on utilise le stéarate de zinc, de calcium, de magnésium, de sodium ou de potassium, ou des mélanges d'au moins deux des stéarates cités.

7. Procédé suivant la revendication 1, caractérisé en ce qu'à titre de sels de métaux de l'acide stéarique (A, ii), on utilise un mélange de stéarate de zinc, de stéarate de calcium et de stéarate de sodium.

8. Procédé suivant la revendication 1, caractérisé en ce qu'à titre d'acides mono- et/ou dicarboxyliques ou leurs anhydrides (B), on utilise des acides monocarboxyliques aliphatiques qui comportent de 1 à 20 atomes de carbone, des acides dicarboxyliques aliphatiques qui comportent de 2 à 36 atomes de carbone, des acides mono et dicarboxyliques aromatiques qui comportent de 7 a 12 atomes de carbone, ou leurs anhydrides.

9. Procédé suivant la revendication 1, caractérisé en ce que pour la préparation de l'agent de démoulage interne (d), on mélange les composants (A, i) et (B) et on incorpore le mélange obtenu au composant (A, ii).

10. Procédé suivant la revendication 1, caractérisé en ce que pour la fabrication des articles ou corps moulés, on utilise des systèmes en un seul coup (one shot), que l'on ouvre selon la technique de moulage sous basse pression ou moulage par injection à réaction (RIM).